(19) Europäisches Patentamt

European Patent Office

Office européen des brevets

(11) **EP 0 494 377 B1**

(12) **EUROPÄISCHE PATENTSCHRIFT**

(45) Veröffentlichungstag und Bekanntmachung des Hinweises auf die Patenterteilung:
**27.02.2002 Patentblatt 2002/09**

(51) Int Cl.⁷: **G01K 1/14**, G01B 5/00, G01B 7/00

(21) Anmeldenummer: **91120943.5**

(22) Anmeldetag: **06.12.1991**

(54) **Koordinatenmessgerät mit schneller Werkstück Temperaturmessung**

Coordinate measuring machine with quick temperature measurment of a workpiece

Instrument de mesure de coordonnées avec mesurage rapide de la température d'une pièce à usiner

(84) Benannte Vertragsstaaten:
**DE ES FR GB IT NL SE**

(30) Priorität: **10.12.1990 DE 4039336**

(43) Veröffentlichungstag der Anmeldung:
**15.07.1992 Patentblatt 1992/29**

(73) Patentinhaber:
• **Firma Carl Zeiss**
**D-73446 Oberkochen (DE)**
Benannte Vertragsstaaten:
**DE ES FR IT NL SE**
• **CARL-ZEISS-STIFTUNG, HANDELND ALS CARL ZEISS**
**73446 Oberkochen (DE)**
Benannte Vertragsstaaten:
**GB**

(72) Erfinder:
• **Enderle, Eckhard**
**W-7080 Aalen-Dewangen (DE)**
• **Wirth, Michael**
**W-7080 Aalen (DE)**
• **Baier, Bernd**
**W-7080 Aalen (DE)**

(56) Entgegenhaltungen:
BE-A- 757 892          DE-A- 3 823 373
FR-A- 2 384 230

• PATENT ABSTRACTS OF JAPAN vol. 10, no. 298 (P-505)(2354) 9. Oktober 1986 & JP-A-61 114 119 ( TOYOTA MOTOR CORP. ) 31. Mai 1986
• PATENT ABSTRACTS OF JAPAN vol. 7, no. 184 (P-216)(1329) 13. August 1983 & JP-A-58 086 409 ( TOYODA KOKI K.K. ) 24. Mai 1983

**Beschreibung**

Für hochgenaue Längenmessungen in der Koordinatenmeßtechnik ist es erforderlich, die Temperatur des Werkstückes im Verlauf der Vermessung zu erfassen, um die temperaturbedingten Längenänderungen des Meßobjekts rechnerisch korrigieren zu können. Dies gewinnt umso mehr an Bedeutung, als sich der Einsatz von Koordinatenmeßgeräten immer mehr aus den hochklimatisierten Feinmeßräumen in die Fertigung verlagert, wo große Temperaturschwankungen möglich sind.

Die Erfassung der Werkstücktemperaturen erfolgt durch Kontaktthermometer, die an das Meßobjekt angelegt werden. Dabei handelt es sich im allgemeinen um Präzisionswiderstände, die mit Hilfe verschiedener Befestigungsvorrichtungen am Werkstück angebracht werden. Neben dem manuellen Anlegen der Kontaktfühler ist aus DE 38 23 373 eine automatisierte Version der Werkstück-Temperaturerfassung bekannt. Beschrieben wird dort das Austauschen des Koordinatenmeßtasters gegen einen Temperatursensor mit Hilfe einer Tasterwechseleinrichtung. Dieser Temperatursensor wird vom Meßarm des Koordinatenmeßgerätes an das Werkstück angefedert, der Kontakt zum Werkstück eine Weile aufrechterhalten und anschließend die ermittelten Temperaturmeßwerte dem Rechner des Koordinatenmeßgerätes übergeben. Ob der Sensor tatsächlich in Kontakt mit dem Meßobjekt ist, wird in diesem Verfahren durch eine Plausibilitätskontrolle der erfaßten Meßwerte überprüft. Bei gleicher Fühler- und Werkstücktemperatur erfolgt jedoch keine Temperaturänderung am Fühler, so daß mit Hilfe der erwähnten Plausibilitätskontrolle keine endgültige Sicherheit darüber zu erhalten ist, ob Kontakt zwischen Sensor und Meßobjekt bestand. Eine weitere Schwierigkeit liegt in der Festsetzung der Meßdauer, d.h. der Kontaktzeit in der der Fühler am Werkstück anliegt. Bei großen Temperaturdifferenzen zwischen Fühler und Werkstück dauert es sicher länger, bis der Fühler die Werkstücktemperatur angenommen hat. Um also sicher zu sein, daß man die tatsächliche Werkstücktemperatur erfaßt hat, ist man gezwungen längere Meßintervalle anzusetzen, was auf Kosten der erwünschten kurzen Meßzeiten geht.

Aus JP 61-114119 A (Patent Abstracts of Japan, Vol. 10, No. 298 (P.505)(2354) vom 9. Oktober 1986) ist ein Verfahren zur schnellen Temperaturmessung bekannt, bei dem aus zu zwei Zeitpunkten gemessenen Temperaturwerten eines Werkstückes die Werkstücktemperatur extrapoliert wird.

Aufgabe der vorliegenden Erfindung ist es daher, die Werkstücktemperaturen mit Hilfe eines tastenden Temperaturmeßkopfes schnell und zuverlässig zu erfassen.

Diese Aufgabe wird gelöst durch ein Verfahren mit den Merkmalen des Anspruchs 1 und ein Koordinatenmeßgerät mit den Merkmalen des Anspruches 3.

Wie bereits in der DE-OS 38 23 373 beschrieben, ist auch hier ein Koordinatenmeßgerät mit automatischer Tasterwechseleinrichtung erforderlich, welches den Koordinatenmeßtaster gegen einen speziellen Temperaturmeßkopf austauscht, der in einem entsprechenden Magazin bereitgehalten wird. Im Unterschied zum beschriebenen Sensor in obiger Schrift wird jedoch ein Temperaturmeßkopf verwendet. der nach dem bekannten Prinzip eines schaltenden Tastkopfes aufgebaut ist, wie es beispielsweise in der DE 27 12 181 beschrieben wird. Der Zeitpunkt der Werkstückberührung wird z. B. durch ein beim Ausheben des beweglichen Teils des Tastkopfes aus seinem Lager erzeugtes Signal registriert. Ein spezielles Auswerteverfahren erlaubt, aus einem kurzen Temperaturverlauf-Meßintervall ab Werkstückberührung auf die tatsächliche Werkstücktemperatur zu extrapolieren, ohne abwarten zu müssen, bis der Fühler die tatsächliche Werkstücktemperatur angenommen hat. Durch Registrierung des Berührungszeitpunkts, sowie das spezielle Auswerteverfahren wird so eine kurze Meßzeit erreicht bei gleichzeitiger Sicherheit daß der Fühler auch tatsächlich am Werkstück anliegt. Mit Hilfe des speziellen Auswerteverfahrens ist eine Verkürzung der Meßdauer um einen Faktor 5-6 möglich, im Vergleich zu einer Messung, bei der das Erreichen der Werkstücktemperatur durch den Fühler abgewartet wird. Ein sicheres flächiges Anliegen des Fühlers am Werkstück ist durch eine zweite Knickstelle im auslenkbaren Teil des Temperaturmeßkopfes gewährleistet, d.h. auch stärker geneigte Werkstückflächen können sicher kontaktiert werden. Weiterhin ist es vorteilhaft, den Temperaturmeßkopf dreh-, bzw. schwenkbar am Meßarm zu befestigen, wie es z.B. in DE 37 40 070 beschrieben wird. Der Temperaturmeßkopf kann dann in Bezug auf die zu kontaktierende Seite des Werkstücks vorausgerichtet werden.

Mit Hilfe eines derartigen Temperaturerfassungs-Verfahrens ist es möglich, die gemessenen Längenmeßwerte um eine eventuelle thermische Ausdehnung zu korrigieren. Nötig ist gegenüber DE 38 23 373 eine Modifizierung in der Temperatur-Erfassungs- und Auswerte-Software, derart, daß der Temperaraturverlauf erst ab Werkstückberührung aufgezeichnet und aus dem aufgezeichneten Verlauf innerhalb eines Meßintervalls auf die Werkstücktemperatur hochgerechnet wird.

Weitere Vorteile der Erfindung ergeben sich aus der nachfolgenden Beschreibung von Ausführungsbeispielen, die anhand der beigefügten Zeichnungen 1 - 5 erläutert werden.

Fig. 1    zeigt eine perspektivische Darstellung eines Koordinatenmeßgerätes mit Tasterwechseleinrichtung, Magazin und eingewechseltem Temperaturmeßkopf

Fig. 2    zeigt einen Teilschnitt des Temperaturmeßkopfes in Seitenansicht

Fig. 3    zeigt einen Schnitt des Temperaturfühlers in Seitenansicht

Fig. 4    zeigt den Temperaturmeßkopf aus Fig. 2 an einem geneigten Werkstück anliegend

Fig. 5    zeigt die graphische Auswertung einer Messung, bei der die Temperaturen von Werkstück und Temperaturmeßkopf separat erfaßt und aufgetragen wurden.

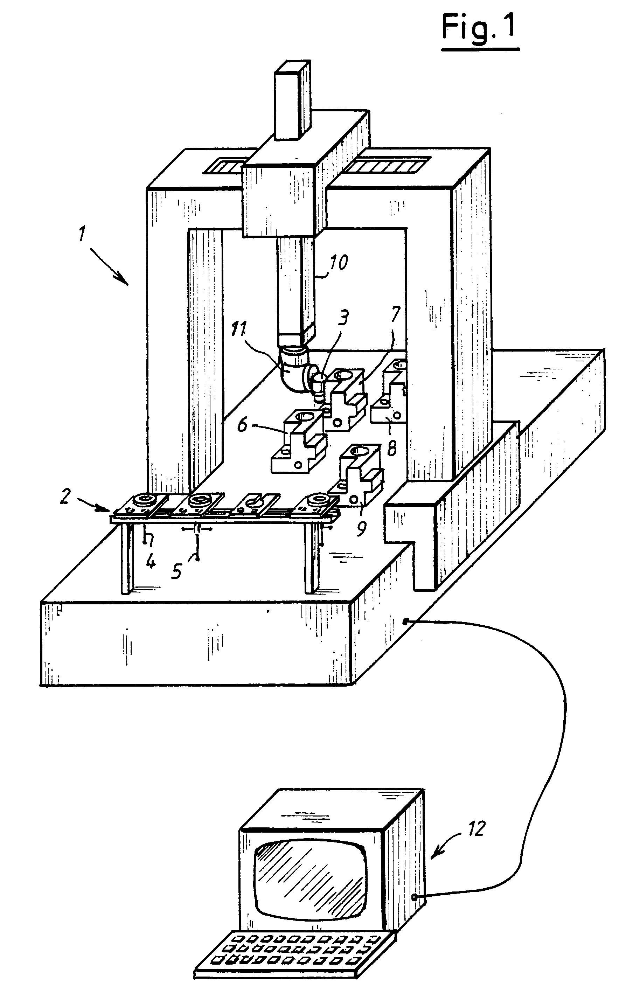

Die in Fig. 1 dargestellte Anordnung mit Koordinatenmeßgerät (1), Magazin (2) und eingewechseltem Temperaturmeßkopf (3) ist bereits prinzipiell aus der Offenlegungsschrift DE 38 23 373 bekannt. Auf diese Beschreibung wird im folgenden Bezug genommen.

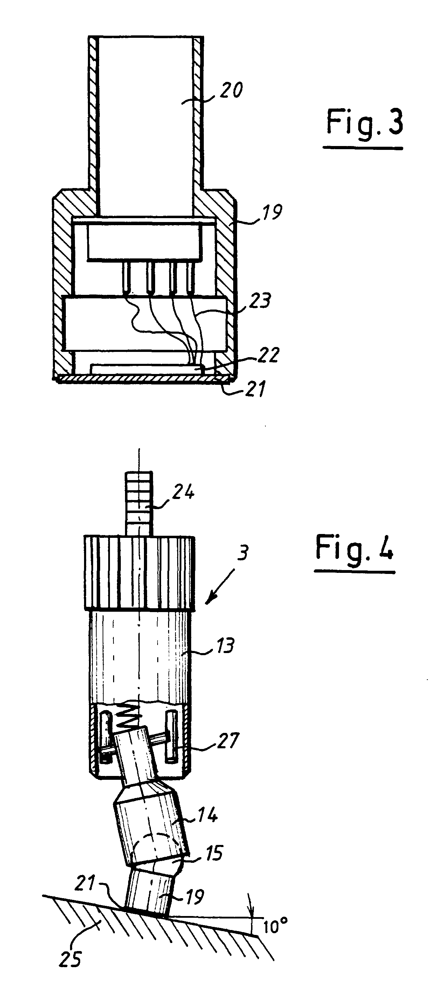

Im Magazin (2) des Koordinatenmeßgerätes (1) werden während der Messung verschiedene Taststiftkombinationen (4, 5), sowie ein Temperaturmeßkopf (3) bereitgehalten. Soll eine Temperaturmessung an einem der aufgespannten Werkstücke (6, 7, 8, 9) vorgenommen werden, so fährt der Meßarm (10) zum Magazin (2) und wechselt den Koordinatenmeßtaster (4, 5) gegen den Temperaturmeßkopf (3) aus. Anschließend fährt der Meßarm (10) wieder zum Werkstück (6, 7, 8, 9) zurück; darauf erfolgt die Ausrichtung des Temperaturmeßkopfes (3) in Bezug auf die Werkstückoberfläche. Dies kann mit Hilfe einer Dreh-Schwenk-Einrichtung (11) am Meßarm (10) durch den Bediener des Koordinatenmeßgerätes geschehen oder aber im Rahmen eines entsprechend programmierten Meßablaufs. Danach erfolgt die Antastung durch Anlegen der Temperaturmeßkopf-Kontaktfläche (21) an eine ebene Werkstückfläche. Der Zeitpunkt der Werkstückberührung wird vom Temperaturmeßkopf (3) durch einen Antastimpuls registriert. Ein derartiger Antastimpuls kann ausgelöst werden durch Auslenkung des beweglichen Meßkopfteiles (14) aus seiner Lagerung (27) im festen Teil (13) des Meßkopfes, wie es in Figur 4 dargestellt wird. Ab diesem Zeitpunkt werden die ermittelten Temperaturmeßwerte an den Rechner (12) des Koordinatenmeßgerätes übergeben und gespeichert. Nach der benötigten Meßdauer fährt der Meßarm (10) wieder zum Magazin (2) und wechselt die für das weitere Koordinaten-Meßprogramm benötigte Taststiftkombination (4, 5) ein.

Aus dem ermittelten Temperaturverlauf-Meßintervall wird über ein noch zu beschreibendes numerisches Auswerteverfahren auf die Werkstücktemperatur hochgerechnet. Mit Hilfe der ermittelten Temperatur wird durch entsprechende Software anschließend die temperaturabhängige Längenausdehnung des Werkstückes derart korrigiert, daß die durchgeführten Koordinatenmessungen den Werkstückabmessungen bei beispielsweise 20° c entsprechen.

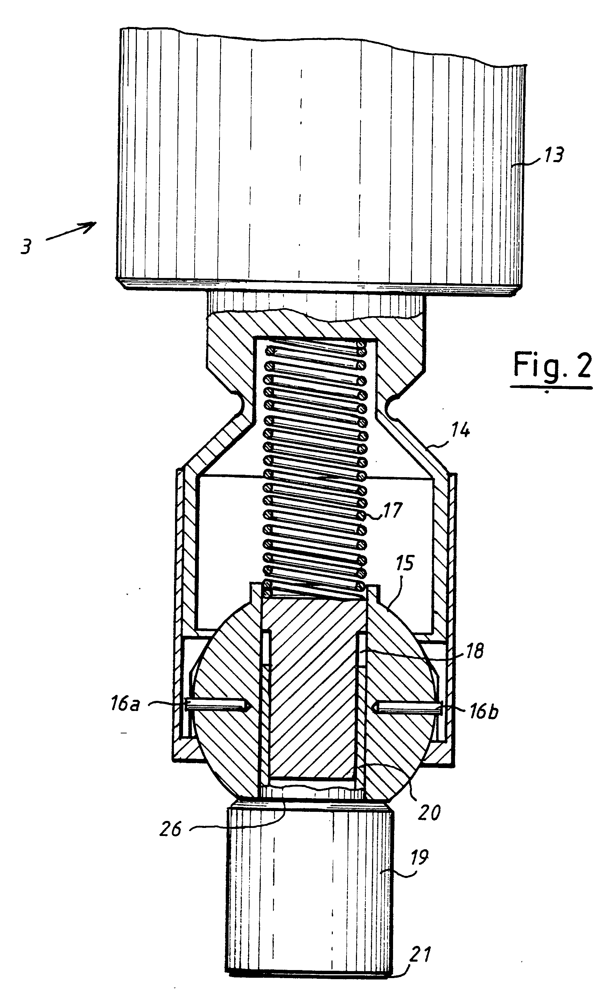

In Fig. 2 ist ein für ein derartiges Temperatur-Erfassungs-Verfahren benötigte Temperaturmeßkopf (3) dargestellt. Dieser ist nach dem bekannten Prinzip des schaltenden Tastkopfes aufgebaut und besteht aus einem gehäusefesten (13) und einem beweglichen, auslenkbaren Teil (14). Bei der Auslenkung des beweglichen Meßkopfteiles (14) aus seinem Lager (27) im festen Teil (13) erfolgt die Auslösung des Antastimpulses, der die eigentliche Meßwerterfassung steuert. Diese Signalauslösung wird beispielsweise in DE 27 12 181 detailliert beschrieben.

Am unteren Ende des auslenkbaren Meßkopfteiles (14), das in Form einer Hülse ausgeführt ist, bildet ein Kugelgelenk (15) eine zweite Knickstelle im Meßkopfsystem. Zwei Zylinderstifte (16a, 16b), die am Hülsenteil (14) befestigt sind, verhindern ein Verdrehen des Kugelgelenks (15) um die Meßkopf-Längsachse. Mit Hilfe einer Feder (17) im oberen Hülsenteil wird das Kugelgelenk (15) in Ruhestellung in einer Mittelposition gehalten. Weiterhin sorgt diese Feder (17) nach Auslenkung des Kugelgelenks (15) wieder für das Zurückdrehen in die Mittelposition.

Das Kugelgelenk (15) enthält im dargestellten Ausführungsbeispiel einen Aufnahmeeinsatz (18) für den Temperaturfühler (19) und die Meßelementzuleitungen (23). Das Kugelgelenk weist an seiner Unterseite eine plane Kontaktflache (26), zum Temperaturfühler (19) auf. Alternativ wäre auch eine nichttrennbare Verbindung zwischen Kugelgelenk (15) und Temperaturfühler (19) möglich.

Der Aufbau des Temperaturfühlers (19) ist in Fig. 3 dargestellt. Dieser ist in Form eines weiteren Hülsenteils (19) ausgeführt, das als Gegenstück (20) zum Aufnahmeeinsatz (18) des Kugelgelenks ausgebildet ist und so die steckbare Befestigung am Kugelgelenk (15) erlaubt. An der Unterseite des Temperaturfühler-Hülsenteils (19) befindet sich eine Kontaktplatte (21), an deren Rückseite das eigentliche Meßelement (22) befestigt ist. Die Kontaktplatte (21) besteht aus einem Material mit guter Wärmeleitfähigkeit und niedriger Wärmekapazität, z.B. Kupfer, und kann zusätzlich versilbert werden, um Wärmestrahlung aus der Umgebung abzuschirmen und eine gute Wärmeleitung vom Werkstück zur Kontaktplatte (21) zu gewährleisten. Das Meßelement (22), beispielsweise ein Pt 100 - Meßwiderstand, wie er von der Firma Degussa, Frankfurt, unter der Bezeichnung GR 2102 vertrieben wird, ist mit Wärmeleitkleber an der Kontaktplatte (21) befestigt, um einen guten Wärmeübergang von der Kontaktplatte (21) zum Meßelement (22) zu gewährleisten. Die Zuleitungen (23) des Meßelementes (22) werden über das Gegenstück (20) im Temperaturfühler (19) und den Aufnahmeeinsatz (18) des Kugelgelenks (15) in den oberen beweglichen Meßkopfteil (14) geführt und über den festen Gehäuseteil (13) zum Meßkopfstecker (24).

In Fig. 4 ist der Temperaturmeßkopf (3) dargestellt, wie er an einer etwas geneigten Werkstückoberfläche (25) anliegt. Das Kugelgelenk (15) im auslenkbaren Meßkopfteil (14) bildet eine zweite Knickstelle im Meßkopfsystem und sichert das nötige flächige Anliegen des Temperaturfühlers (19) an der Werkstückoberfläche (25). Ohne diese zweite Knickstelle (15) wäre lediglich eine Neigung der Werkstückoberfläche um ca. 2° gegenüber der Symmetrieachse des Meßsystems möglich. Die zusätzliche Kugelgelenk-Knickstelle (15) erlaubt es, Schräglagen bis zu ca. 10° auszugleichen und so den nötigen flächigen Kontakt des Temperaturfühlers (19) zum Werkstück herzustellen. Weiterhin wird dargestellt, wie der auslenkbare Meßkopfteil (14) aus seiner Lagerung (27) im festen Meßkopfteil (13) aushebt und so den Antastimpuls auslöst.

Nachdem der Kontakt zwischen dem Temperaturfühler (19) und dem Werkstück durch das Meßkopfsignal festgestellt wurde, erfolgt die Temperaturmessung durch den Temperaturfühler (19). Die ermittelten Meßwerte werden an den Rechner des Koordinatenmeßgerätes (12) übergeben und gespeichert. Mit Hilfe eines speziellen Auswerteverfahrens ist es möglich, die Temperaturmessung vor dem Erreichen der tatsächlichen Werkstücktemperatur abzubrechen und aus dem gespeicherten Temperaturverlauf ab Werkstückberührung auf die Werkstücktemperatur hochzurechnen.

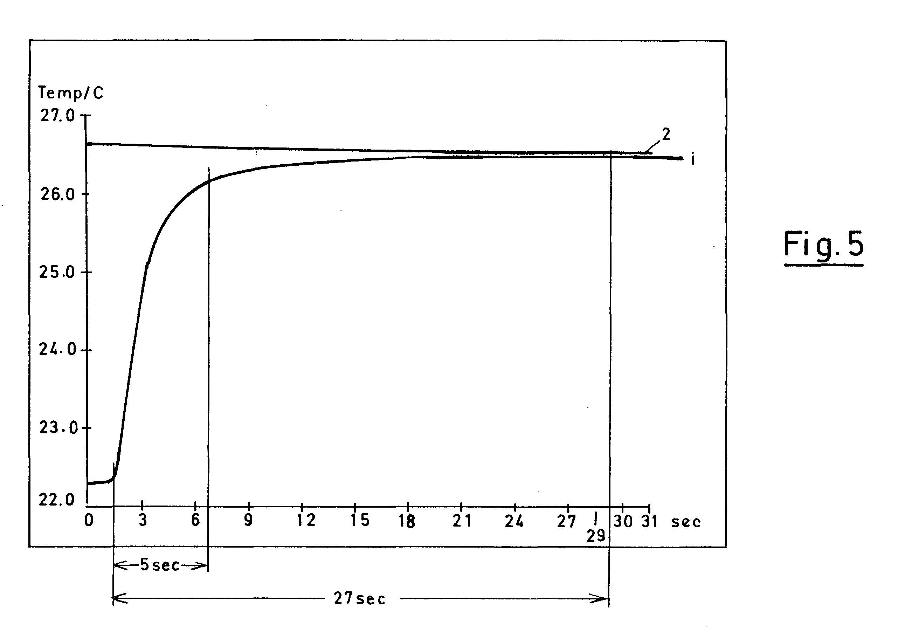

In Fig. 5 ist der Temperaturverlauf am Temperaturfühler (19) in Kurve 1 dargestellt, während Kurve 2 die Werkstücktemperatur während des Meßvorgangs zeigt. Der deutliche Knick nach ca. 1-2 sec. in Kurve 1 markiert den Zeitpunkt des erfolgten Kontakts zwischen dem Temperaturfühler (19) und dem Meßobjekt. Bis der Temperaturfühler die tatsächliche Werkstück-temperatur angenommen hat, müßte in diesem Meßbeispiel der Kontakt zum Werkstück etwa 27 sec. aufrechterhalten werden. Mit Hilfe des speziellen Auswerteverfahrens nach der Erfindung genügt jedoch eine Kontaktzeit von etwa lediglich 5 sec. ab Werkstückberührung, in der der Temperaturverlauf aufgezeichnet wird, um auf die tatsächliche Werkstücktemperatur extrapolieren zu können.

Dazu wird der gemessene Temperaturverlauf $T_F$ (t) beispielsweise an eine Funktion der Form

$$T_F (t) = T_{WS} (1 - e^{-t/\tau})$$

angepaßt.

Wobei

$T_F$: = Fühlertemperatur
$T_{WS}$: = Werkstücktemperatur
t: = Meßdauer
$\tau$: = kontaktspezifische Konstante (materialabhängig)

Aus der Anpassung erhält man die beiden Anpassungsparameter $T_{WS}$ und $\tau$, wobei $T_{WS}$ die Werkstücktemperatur ist, die sich nach genügend langer Meßdauer einstellt, während $\tau$ eine kontaktspezifische Größe ist. Durch dieses Auswertungsverfahren ist eine Extrapolation der Werkstücktemperatur mit einer Genauigkeit von 0,1 K möglich, bei einer Verkürzung der Meßdauer um einen Faktor 5-6 gegenüber dem tatsächlichen Erreichen der Werkstücktemperatur durch den Temperaturfühler.

Die dadurch bestimmte Werkstück-Temperatur kann nun dazu verwendet werden, die temperaturabhängige Längenausdehnung des Werkstückes zu korrigieren.

**Patentansprüche**

1. Verfahren zur schnellen Werkstück-Temperaturmessung auf Koordinatenmeßgeräten mit Hilfe eines Temperatur-Meßkopfes (3), der eine in Richtung der Werkstückoberfläche (25) ausgerichtete Kontaktfläche (21) besitzt, die mit dem Werkstück in Kontakt gebracht wird, wobei die Temperaturmeßwerte während einer bestimmten Zeitdauer erfaßt und gespeichert werden wobei zusätzlich mit dem Temperaturmeßkopf (3) ein elektrisches Antastsignal ausgelöst wird, das den Zeitpunkt der Berührung mit dem Werkstück registriert, und wobei aus dem Verlauf der gespeicherten Temperaturmeßwerte in einem zum Zeitpunkt der Werkstückberührung beginnenden Meßintervall die Werkstücktemperatur ermittelt wird, wobei der Verlauf der Temperaturmeßwerte ab dem Zeitpunkt der Werkstückberührung aufgezeichnet und vor Erreichen der tatsächlichen Werkstücktemperatur über ein numerisches Auswerteverfahren an eine vorgegebene Funktion angepaßt wird und die tatsächliche Werkstücktemperatur mit Hilfe der ermittelten Anpassungsparameter ($T_{WS}$) bestimmt wird.

2. Verfahren nach Anspruch 1, **dadurch gekennzeichnet, daß** der Koordinatenmeßtaster (4,5) des Koordinatenmeßgerätes (1) vor der Temperaturmessung am Werkstück gegen einen Temperaturmeßkopf ausgewechselt und nach der Temperaturmessung wieder eingewechselt wird.

3. Koordinatenmeßgerät mit

   - einem Temperaturmeßkopf (3) zur schnellen Werkstücktemperaturmessung auf Koordinatenmeßgeräten bestehend aus einem gehäusefesten (13) und einem relativ dazu beweglichen Teil (14), das den Temperaturfühler trägt, wobei das bewegliche Teil (14) so gelagert ist, daß es bei erfolgter Antastung der Werkstückoberfläche (25) ein elektrisches Signal auslöst, das die Temperaturerfassung steuert und
   - einem Rechner (12) zur Ermittelung der Werkstücktemperatur der die vom Temperaturmeßkopf gemessenen Temperaturmeßwerte während einer bestimmten Zeitdauer erfaßt und speichert und aus dem Verlauf der gespeicherten Temperaturmeßwerte in einem zum Zeitpunkt der Werkstückberührung beginnenden Meßintervall die Werkstücktemperatur ermittelt und dazu der Verlauf der Temperaturmeßwerte ab dem Zeitpunkt der Werkstückberührung aufgezeichnet wird und vor Erreichen der tatsächlichen Werkstücktemperatur über ein numerisches Auswerteverfahren an eine vorgegebene Funktion angepaßt wird und die tatsächliche Werkstücktemperatur mit Hilfe der ermittelten Anpassungsparameter ($T_{WS}$) bestimmt wird.

4. Koordinatenmeßgerät nach Anspruch 3, **dadurch gekennzeichnet, daß** sich am unteren Ende des beweglichen Meßkopfteiles (14) ein Kugelgelenk (15) befindet, das eine Aufnahmevorrichtung (18) für den Temperaturfühler (19) besitzt.

5. Koordinatenmeßgerät nach Anspruch 3 und 4, **dadurch gekennzeichnet, daß** eine Rückstellfeder (17) im oberen beweglichen Meßkopfteil (14) das Kugelgelenk (15) in seiner Ruhestellung in Mittelposition hält.

6. Koordinatenmeßgerät nach Anspruch 3 und 4, **dadurch gekennzeichnet, daß** der Temperaturfühler (19) in Form eines Hülsenteils ausgeführt ist, an dessen oberem Ende das Gegenstück (20) zur Aufnahmevorrichtung (18) im Kugelgelenk (15) befestigt ist.

7. Koordinatenmeßgerät nach Anspruch 3 bis 6, **dadurch gekennzeichnet, daß** die dem Werkstück zugewandte Seite des Temperaturfühler-Hülsenteils (19) aus einer Kontaktplatte (21) besteht, an deren Rückseite das Meßelement (22) befestigt ist, wobei das Material der Kontaktplatte (21) eine Wärmeleitfähigkeit $\lambda \geq 380$ W/Km und eine niedrige Wärmekapazität aufweist.

**Claims**

1. Method for quickly measuring the temperature of a workpiece on coordinate measuring instruments with the aid of a temperature measuring head (3) which has a contact surface (21) which is aligned in the direction of the workpiece surface (25) and which is brought into contact with the workpiece, the measured temperature values being acquired and stored during a specific time interval, the temperature measuring head (3) being used additionally to trigger an electric scanning signal which records the instant of contact with the workpiece, and the workpiece temperature being determined from the profile of the stored measured temperature values in a measuring interval starting at the instant of the contact with the workpiece, the profile of the measured temperature values being recorded from the instant of contact with the workpiece and being adapted to a prescribed function by using a numerical evaluation method before the actual workpiece temperature is reached, and the actual workpiece temperature being determined with the aid of the determined adaptation parameters ($T_{WS}$).

2. Method according to Claim 1, **characterized in that** the coordinate measuring feeler (4, 5) of the coordinate measuring instrument (1) is exchanged for a temperature measuring head before the temperature measurement at the workpiece, and is reexchanged after the temperature measurement.

3. Coordinate measuring instrument having

   - a temperature measuring head (3) for quickly measuring the workpiece temperature on coordinate measuring instruments, comprising a part (13) fixed to the housing and a part (14) which can move relative thereto and bears the temperature feeler, the moving part (14) being mounted such that upon completed scanning of the workpiece surface (25) it triggers an electric signal which controls the temperature acquisition, and
   - a computer (12) for determining the workpiece temperature which, during a specific time period, acquires and stores the temperature values measured by the temperature measuring head, and uses the profile of the stored measured temperature values to determine the workpiece temperature in a measuring interval starting at the instant of contact with the workpiece, and for this purpose the profile of the measured temperature values is recorded from the instant of contact with the workpiece and is adapted to a prescribed function by using a numerical evaluation method before the actual workpiece temperature is reached, and the actual workpiece temperature is determined with the aid of the determined adaptation parameters ($T_{WS}$).

4. Coordinate measuring instrument according to Claim 3, **characterized in that** located at the lower end of the movable measuring head part (14) is a spherical joint (15) which has a holding device (18) for the temperature feeler (19).

5. Coordinate measuring instrument according to Claims 3 and 4, **characterized in that** a restoring spring (17) in the upper movable measuring head part (14) holds the spherical joint (15) in its neutral position in the central position.

6. Coordinate measuring instrument according to Claims 3 and 4, **characterized in that** the temperature feeler (19) is designed in the form of a sleeve part at whose upper end the counterpart (20) for the holding device (18) in the spherical joint (15) is fastened.

7. Coordinate measuring instrument according to Claims 3 to 6, **characterized in that** the side of the temperature feeler sleeve part (19) facing the workpiece comprises a contact plate (21) on whose rear side the measuring element (22) is fastened, the material of the contact plate (21) having a thermal conductivity $\lambda \geq 380$ W/Km and a low thermal capacity.

## Revendications

1. Procédé pour la mesure rapide de la température de pièces sur des appareils de mesure de coordonnées, à l'aide d'une tête de mesure de température (3) qui possède une surface de contact (21) orientée dans la direction de la surface (25) de la pièce et qui est amenée en contact avec la pièce, les valeurs de mesure de température étant saisies pendant une durée déterminée et enregistrées, et en outre, un signal électrique de contact qui enregistre l'instant de l'entrée en contact de la pièce avec la tête de mesure de la température (3) est déclenché, la température de la pièce étant détectée à partir de l'évolution des valeurs de mesure de température mises en mémoire dans un intervalle de mesure qui commence à l'instant de l'entrée en contact avec la pièce, l'évolution des valeurs de mesure de la température étant caractérisée à partir de l'instant de l'entrée en contact avec la pièce étant adaptée à une fonction prédéterminée par l'intermédiaire d'un procédé numérique d'évaluation avant l'atteinte de la température effective de la pièce, la température effective de la pièce étant déterminée à l'aide des paramètres d'adaptation ($T_{WS}$) ainsi déterminés.

2. Procédé selon la revendication 1, **caractérisé en ce que** le palpeur de mesure de coordonnées (4, 5) de l'appareil (1) de mesure de coordonnées est remplacé par une tête de mesure de température avant la mesure de la température de la pièce et est replacé après la mesure de température.

3. Appareil de mesure de coordonnées, présentant

   - une tête de mesure de température (3) pour la mesure rapide de la température de la pièce sur des appareils de mesure de coordonnées, constituée d'une pièce (13) solidaire du boîtier et d'une pièce (14) mobile par rapport à ce dernier et qui porte la sonde de température, la pièce mobile (14) étant montée de telle sorte que lorsqu'elle est entrée en contact avec la surface (25) de la pièce, elle déclenche un signal électrique qui lance la saisie de la température,

   - un calculateur (12) pour la détermination de la température de la pièce, qui saisit les valeurs de mesure de température mesurées par la tête de mesure de température pendant une durée déterminée et les met en mémoire, qui détermine la température de la pièce à partir de l'évolution des valeurs de mesure de température mises en mémoire dans un intervalle de mesure qui commence à l'instant de l'entrée en contact avec la pièce, et à cet effet l'évolution des valeurs de mesure de la température est caractérisée à partir de l'instant de l'entrée en contact avec la pièce et est adaptée à une fonction prédéterminée par l'intermédiaire d'un procédé numérique d'évaluation avant l'atteinte de la température effective de la pièce, la température effective de la pièce étant déterminée à l'aide des paramètres d'adaptation ($T_{WS}$) ainsi déterminés.

4. Appareil de mesure de coordonnées selon la revendication 3, **caractérisé en ce qu'**une articulation sphérique (15) qui présente un dispositif de réception (18) pour la sonde de température (19) est située à l'extrémité inférieure de la partie mobile (14) de la tête de mesure.

5. Appareil de mesure de coordonnées selon les revendications 3 et 4, **caractérisé en ce qu'**un ressort de rappel (17) situé dans la partie supérieure mobile (14) de la tête de mesure maintient l'articulation sphérique (15) dans sa position de repos, en position centrale.

6. Appareil de mesure de coordonnées selon les revendications 3 et 4, **caractérisé en ce que** la sonde de température (19) est réalisée sous la forme d'une pièce en douille à l'extrémité supérieure de laquelle la pièce complémentaire (20) est fixée sur le dispositif de réception (18) de l'articulation sphérique (15).

7. Appareil de mesure de coordonnées selon les revendications 3 à 6, **caractérisé en ce que** le côté de la pièce en manchon (19) de la sonde de température tourné vers la pièce est constitué d'une plaque de contact (21) sur le côté arrière de laquelle l'élément de mesure (22) est fixé, le matériau de la plaque de contact (21) présentant une conductivité thermique $\lambda \geq 380$ W/Km et une faible capacité calorifique.

Fig.1

3

13

Fig. 2

14

17

15

18

16a

16b

26

20

19

21

Fig.3

Fig.4

Fig.5